# EUROPEAN PATENT SPECIFICATION

(11) **EP 1 513 290 B1**
(45) Date of publication and mention of the grant of the patent: **12.07.2006**
(21) Application number: 03292158.7
(22) Date of filing: 03.09.2003
(51) Int. Cl.: H04L 12/28, H04Q 7/38

(54) **Mobile terminal location in a WLAN through access point registration**
Lokalisierung von mobilen Stationen in einem WLAN durch Zugangspunktregistrierung
Localisation de stations mobiles dans un WLAN avec enregistrement de points d'accès

(43) Date of publication of application: 09.03.2005
(73) Proprietor: ALCATEL, 75008 Paris (FR)
(72) Inventor: Lauriol, Jean-Michel, 67640 Fegersheim (FR)
(74) Representative: Rausch, Gabriele

(56) References cited:
- WO-A-02/079796
- US-A- 6 061 563
- AKYILDIZ I F ET AL: "MOBILITY MANAGEMENT IN CURRENT AND FUTURE COMMUNICATIONS NETWORKS" IEEE NETWORK, IEEE INC. NEW YORK, US, vol. 12, no. 4, July 1998 (1998-07), pages 39-49, XP000875304 ISSN: 0890-8044

## Description

### Technical Field

The present invention relates to a method for location of a mobile terminal inside the perimeter of a Wireless Local Area Network WLAN. Furthermore, it is related to a location system for mobile terminal inside the perimeter of said WLAN. It is also related to a managing system coupled to a plurality of Access Points AP defining said WLAN. And it is related to an AP being part of said WLAN.

### Background of the invention

Today, in many companies or in closed area like airports, hotels, or railway are deployed WLAN technologies such as IEEE 802.11, Bluetooth for data and voice applications. They allow a mobile user to access Internet services or Intranet company services through their mobile terminal like a mobile phone, a PDA or a laptop equipped with a WLAN card. For security and emergency reasons (911/112 services, ...), it will be necessary to locate employees inside the premises or the client inside the closed area covered by the respective WLAN. Thanks to the WLAN radio technology, it will be possible to locate a mobile terminal within a radio cell and to maintain in real time a centralized database of mobile user location.
US-A-6061563 disclosed a management of access data in the several Access points.
The access points are linked and the management of access data shortens available bandwidth for the users.
In IEE Proceedings H. Microwaves, Antennas and Propagation, 1991, 138 (6 Part H) 485-492 is the idea of a centralized a management of access data discussed shortly.
The management is restricted to the access points but not to singles subscribers.

In US2002/6788 is disclosed a method and apparatus for providing a range of location dependent information and services to users of wireless devices coupled to a multi-point wireless access network. The multi-point wireless access network includes: wireless access devices, an inventory map and a server. The wireless access points are arrayed in a coordinate system with a known relative relationship to one another. Each of the wireless access points provides communication capabilities for corresponding proximate ones of the wireless devices. The inventory map correlates selected ones of the wireless access points with corresponding inventory located proximate to each of the selected ones of the wireless access points and to the inventory map. Furthermore, the server correlates each access to the multi-point wireless access network from a corresponding wireless access network from a corresponding wireless device with the corresponding inventory from the inventory map to provide at least one of location dependant information and location dependant services to the corresponding wireless devices.

It exits already several WLAN administration tools providing a security system using such location dependent information as described above. It is mainly based on a centralized server allowing to display which mobile terminal are associated for a dedicated Access Point AP in this WLAN. The problem comes from the necessity when providing security to keep updated all these information. And this is usually based on some polling mechanism. Thus, the server requests periodically from all the AP the list of respectively associated mobile terminals, generating a lot of traffic in the wired network.

A recent alternative solution was announced from the Ekahau company based on indoor positioning. But it implies at first some calibration phase. This "learning" phase requires to perform a measurement everywhere in the WLAN area and to register the associated received signal strength intensity RSSI value at each position in order to build a reference database. This phase can be at least quite time consuming. Furthermore, it is required to redo the calibration phase each time the radio environment will change due to e.g. new positioning of walls or shelves, new AP, etc. In addition, they are no guaranty that this reference model will work for all mobile terminals since the sensitivity will be quite different between each mobile terminals.

### Summary of the invention

In view of the above, it is an object of the present invention to provide a location method for a mobile terminal inside the area covered by some WLAN with a maximum guaranty but without blocking to much traffic resources inside said WLAN.

This object is achieved in accordance with the invention by using a standard WLAN architecture deployed e.g. within the premise of an enterprise and made out of Access Points (AP) and mobile terminals (STA). A managing system like a dedicated server called e.g. "WLAN location server" and connected to a Internet Protocol IP core network will collect in a real time entries and exits of each STA within a radio cell. Latter are performed through a location protocol between APs and the server based on a notification by a AP of a mobile terminal access to the WLAN. Each time a STA will join a radio cell covered by an AP, it will issue an "association" procedure as defined in the IEEE 802.11 standard. Instead, other procedure can be issued typically at a status change of the STA. An example hereunto is the so-called "reassociation" procedure issued when a handover mechanism will be performed - transfer of that STA from the old radio cell to another one covered by a new AP. Alternately, a STA can be transferred outside a cell. Such status change of the STA will issue a "deassociation" procedure towards the AP.

The method for location of a mobile terminal STA according to the present invention is based on the use of the new location protocol made out among other of notifications or messages sent from APs to the "WLAN location server". Such notification will be initiated by the AP when receiving some signals from the STA e.g. at a status change. Latter are possibly but not exclusively triggered on IEEE 802.11 procedures such as association, reassociation, deassociation or also on STA inactivity detection within the AP.

In an embodiment according to the invention, the proposed protocol WLP (WLAN Location Protocol) will use information defined in the IEEE 802.11 but without implying any changes in the IEEE 802.11 standard. WLP is based on TCP packets over IP and supports any kind of WLAN architecture, especially deployed APs within different IP sub-nets.

The mobile terminal STA to be located over such a WLAN can be a mobile phone, a PDA or a laptop using mainly data applications as well as handset using voice services (e.g. VoIP over WLAN). Other mobile terminals could be conceivable as long as they comprise a WLAN interface or are possibly WI-FI compatible to be able to exchange data with the APs to be recognized. The accuracy of the location can be adapted by defining e.g. smaller radio cell implying the use of a bigger number of APs to cover the whole perimeter of the WLAN, but without any impacts on the protocol.

An embodiment of the present invention comprises a further step with the AP initiating a paging procedure if no signal like a status change was received by said AP after a predefined time interval when it was initially located. This situation usually correspond to the case when the STA is inactive but in some standby mode or simply switch off or in some idle mode. The paging procedure will be based on the sending of a probe request from the AP to the STA verifying its presence (if in some standby mode) or not within the corresponding cell.

The invention further relates to a location system comprising a WLAN made out of a plurality of AP being positioned in at least a known relative relationship to one another, all coupled to a managing system. The location system will be activated each time a mobile terminal STA will access said WLAN i.e. when an AP will receive a notification from some STA. This notification possibly adapted to be compatible to a specific protocol, will be forwarded by the AP to said managing system. Latter will then be able to define some setting corresponding to the location of said mobile terminal over said WLAN. This setting will be kept actualized in case by updating it at least at a change of said mobile terminal access.

Advantageous developments of the invention are described in the dependent claims, the following description and the drawings.

### Description of the drawings

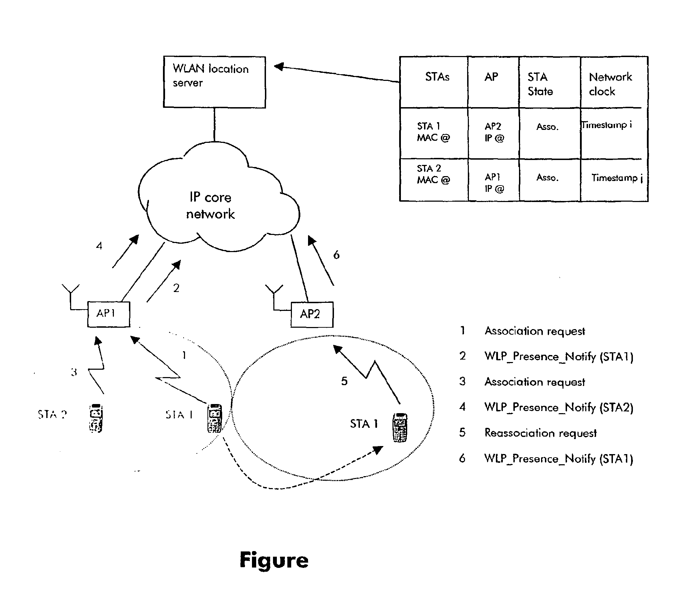

An exemplary embodiment of the invention will now be explained further with the reference to the attached drawing in which:
The sole figure discloses a schematic view of a WLAN together with some steps of the method according to the present invention.

### Detailed description of preferred embodiments

On the figure is shown an IP core network. A managing system here in form of a WLAN location server is connected to that IP core network. Preferably, it is this server which will centralized all the information concerning the location of the different mobile terminal inside the perimeter covered by at least one WLAN. Furthermore, two access points AP1 and AP2 connected to the IP core network are shown on the figure. To each of the access points AP1, AP2 are affected a cell covered by said respective AP. And two mobile terminals STA1 and STA2 are shown to be initially in the perimeter of the cell covered by AP1 while the mobile terminal STA1 will move to the cell covered by AP2. The access points here two AP1 and AP2 but a plurality could be used to build one or more WLAN, will be positioned in at least a known relative relationship to one another.

The method according to the present invention for location of a mobile terminal STA1, STA2 inside the perimeter of the WLAN defined by the Access Points AP1, AP2 comprises the steps of:
- receiving by an access point AP1 a signal 1, 3 corresponding to an access to said WLAN - here association request - by the mobile terminals respectively STA1, STA2;
- forwarding from the AP1 to said location system a notification 2, 4 of the respective mobile terminal access 1, 3 to said WLAN;
- defining by said managing system according to previous notification 2, 4 a setting corresponding to the location of said mobile terminal over said WLAN.
Furthermore, the method comprises the step of:
- keeping the setting actualized in case by updating it at least at a change of said mobile terminal access 5 being forwarded as notification 6 from at least an AP here AP2 to said managing system.

To optimize the location particularly for security and emergency reasons, it is preferable to insert the Media Access Control MAC address of the mobile terminal into the notification forwarded from the AP to said location server. As shown on the figure with a table affected to said location server, the MAC address will be used for the corresponding setting of the mobile terminal STA1, STA2. Furthermore, it is of advantage but not necessary to collect an IP-address of the corresponding mobile terminal using its MAC-address.

This IP-address will be advantageously used for targeting said mobile terminal by at least one AP when performing some paging procedure. Latter can be initiated if no signal like a status change of said mobile terminal will be received by at least an AP after a predefined time interval. The paging procedure is then based on the sending of a probe request from at least an AP to said mobile terminal as a presence test inside said WLAN. On the figure is shown the setting stored at the location server comprising the MAC address as well as the IP address of the mobile terminals STA1, STA2. It further shows that more information can be stored like the status of the mobile terminal corresponding to the last notification here "association" for both STA1, STA2. Also a timestamp can be affected to each mobile terminal guarantying the reliability of the location. Latter can be advantageously used in the paging procedure.

The notifications sent from the APs to the said managing system are forwarded through a Intranet network included several layer 2 switches and IP routers. Therefore, these notifications could be received in the said managing system with a non chronological order. It is a reason why a timestamp, global and synchronized in the network, could be of advantage to check the sequence order of these notifications.

Using the timestamp requires that the plurality of AP as well as the managing system being synchronized. In that case a timestamp will be insert in each notification to be forward by the AP to said managing system to be used for a location setting of a specific mobile terminal. This timestamp will indicate the time at which the notification is sent by the AP. This time comes from the network clock keeped in live in each AP through the NTP (Network Time protocol - RFC 1305). Also, this time allows to the said managing system to give more information of the mobile location for example when it enters or leave a radio cell.

Advantageously, a proposed protocol WLP (WLAN Location Protocol) could be used to apply the present location method. The WLP uses one TCP packet carrying different states of the mobile terminal STA. This packet is sent from an AP to the WLAN location server each time a STA joins or leaves of a radio cell. The integrity of the WLAN location server database could be based on timestamp received from AP or other alternative. The timestamp indicating the network clock and inserted within the WLP packets allows to maintain the most recent state of each STA.
When the AP receives an "Association request" from the STA, it sent a WLP_Presence_Notify packet to the WLAN location server carrying the IEEE MAC address of the STA, the time stamp and the state of the STA (= associated). When the AP receives an "reassociation request" from the STA invoked during handover procedure, it sent a WLP_Presence_Notify packet to the WLAN location server carrying the IEEE MAC address of the STA, the timestamp and the state of the STA (= associated). When the AP receives an "deassociation request" from the STA, it sent a WLP_Presence_Notify packet to the WLAN location server carrying the IEEE MAC address of the STA, the timestamp and the state of the STA (= deassociated).

Sometimes, the STA can leave "suddenly" the cell without having the time to issue a "deassociation" procedure (eg instant switch off the terminal). Also, the STA can move outside the radio coverage area. In these cases, the AP is not notified by the STA of its leaving. Therefore, a dedicated mechanism should be implemented in the AP in order to detect this STA inactivity. Hereunto, the paging procedure will be applied, initiated from the AP using possibly a ping protocol at IP level between AP and the STA. It assumes that the AP got the IP address of the STA after the "association" procedure. The way to get an IP address from the MAC address can be usage of Inverse ARP protocol (RFC 1293). This paging procedure can be issued periodically towards all the STAs associated to the AP, or initiated after a predefined time interval like a time of IEEE 802.11 frames inactivity of each STA. The paging procedure could be based on IEEE 802.11 management frames such as Probe Request and Probe Response frames used in an active scanning mode. To know if the STA is "alive", the AP sends a Probe Request frame to the STA which should respond by a Probe response frame. Today, the 802.11 standard is not enough clear to know if an AP is able to send a Probe Request frame. If yes, it is the best solution for the paging procedure. In all the cases, this STA disappearance generates a transmission of a WLP_Presence_Notify packet to the WLAN location server carrying the IEEE MAC address of the STA, the timestamp and the state of the STA (= away).

The WLP_Presence_Notify packet is a TCP packet and could be structured with the following format:
- Source MAC address = IEEE MAC address of the AP on the wired network;
- Destination MAC address = IEEE MAC address of the WLAN location serve;
- Source IP address = IP address of the AP;
- Destination IP address = IP address of the WLAN location server;
- TCP payload :
   - STA MAC address = IEEE MAC address of the STA who is leaving or joining the AP cell;
   - STA state = associated or deassociated or away;
   - Timestamp = clock format as defined in RFC 1305.

The managing system here as a location server maintains a table with a mapping between STA MAC address, AP IP address, STA state and timestamp. On receiving the WLP_Presence_Notify packet, the server update the new state of the STA, checking that the timestamp is the most recent. If the server received an older timestamp compared to the one in the table it it ignores the WLP_Presence_Notify packet. This case can occur for example when a STA issues an handover procedure from an AP1 (association request) to an AP2 (reassociation request). We can imagine, that the WLP_Presence_Notify packet sent from the AP1 arrives to the server after the one sent from the AP2.

This method using the timestamp offers an advantage since it is completely transparent to the mobile. An alternative exists using timestamp generated locally by the STA instead of network time and keeping the same principle as defined before. In this case the STA inserts its local time at each Association Request, Re-association request or De-association request through a new field to be defined in the 802.11 frames. Then, the WLP_Presence_Notify packet carries within the TCP payload the timestamp field including the local clock of the STA.) Thus, the server stores STA information from WLP_Presence_Notify packet with the most recent time.

Instead of using timestamp from network clock or local clock in the STA, an other alternative could be chosen based on a sequence number in order to figure out the latest association of the STA. The sequence number is the one used and defined in the IEEE 802.11 standard. It is a counter modulo 4096 incremented by the STA and inserted in each transmitted data and management frames. When the AP received an "association" or "re-association" or "de-association" request, it sent a WLP packets to the WLAN location server carrying this sequence number instead of the timestamp. It is assumed that this sequence number sent by the STA is stored in a NVM (Non Volatile Memory) in the mobile terminal and shall not be reset after a switch off/switch on procedure. The other assumption comes from the IEEE 802.11standard defining a single association for each STA at a given time. The integrity of the location server is based on an algorithm using this sequence number allowing to figure out the most recent sequence number. The advantage of this solution is that it is based on standard 802.11 product (AP, STAs) without new features to add (network clock synchronisation or local clock management in the STA). The problem is that it is difficult to defined the "older" or "newer" sequence number concept since it is a 12 bits counter which is incremented rapidly. An evolution of the 802.11 standard could be such that a sequence number will be dedicated for the "association", "de-association", "reassociation" request frames allowing to have a slower incrementation.

## Claims

1. A method for location of a mobile terminal inside the perimeter of a Wireless Local Area Network (WLAN) made out of a plurality of Access Points (AP) being positioned in at least a known relative relationship to one another and coupled to at least a centralized WLAN location server including a managing system, while said method comprising the steps of:
• forwarding from at least an AP a notification of a mobile terminal access to said WLAN location server via said WLAN;
• defining by said managing system according to previous notification a setting corresponding to the location of said mobile terminal over said WLAN;
• **characterized in**
• using an Internet protocol network in the connection between the WLAN location server and the access points and
• using a central managing system for access points
• keeping the setting of the mobile terminal actualized by updating it at least at a status change of said mobile terminal via the Internet protocol network and the WLAN network.

2. The method according to claim 1 **characterized in that** a Media Access Control (MAC) address of the mobile terminal is part of the corresponding forwarding notification from the AP to said WLAN location server running the managing system to be used for the corresponding setting.

3. The method according to claim 1 **characterized in that** the AP will forward a notification to said managing system also at a received status change like an association, a de-association or re-association of corresponding mobile terminal.

4. The method according to claim 1 **characterized in that** said method comprising further the step of initiating a paging procedure if no signal like a status change of said mobile terminal being received by at least an AP after a predefined time interval, said paging procedure being based on the sending of a probe request from at least an AP to said mobile terminal as a presence test inside said WLAN.

5. The method according to claim 4 **characterized in that** at the first mobile terminal access to said WLAN a procedure will be initiated to collect an IP-address of the corresponding mobile terminal using its MAC-address, said IP-address being used for targeting said mobile terminal when performing said paging procedure.

6. The method according to claim 1 **characterized in that** a local time or sequence number originated from some mobile terminal and to be transmitted from the mobile terminal to the AP will be at least part of the corresponding forwarding notification from the AP to said managing system to be used for the corresponding setting.

7. The method according to claim 1 **characterized in that** the plurality of AP as well as the managing system being synchronized so that a timestamp will be insert in each notification to be forward by the AP to said managing system to be used for a location setting of a specific mobile terminal.

8. A managing system, being a software in a WLAN location server coupled to a plurality of Access Points (AP) defining a Wireless Local Area Network (WLAN) and being positioned in at least a known relative relationship to one another, **characterised in that** said managing system includes modules to keep track of each mobile terminal over the perimeter of said WLAN, the managing system includes modules to receive a notification of a mobile terminal access to said WLAN from at least an AP via on IP network, a further module allows said managing system to define a setting corresponding to the location of said mobile terminal over said IP network and WLAN , and a further module keeps said setting actualized by updating it at least at a status change of said mobile terminal access to be forwarded as notification from at least an AP to said managing system.

9. The managing system according to claim 8 **characterized in that** it is at least a server adapted to communicate with the plurality of AP using Internet Protocol.

10. A location system for mobile terminal inside the perimeter of a Wireless Local Area Network (WLAN) made out of a plurality of Access Points (AP) according to claim 12 being positioned in at least a known relative relationship to one another and coupled to at least a managing system in a WLAN location server according claim 8 .

11. The location system according to claim 10 **characterized in that** the location system has a paging procedure means being initiated by at least an AP if no signal like a status change of the mobile terminal being received by at least an AP after a predefined time interval, said paging procedure means being based on the sending of a probe request from said AP to said mobile terminal as a presence test inside said WLAN.

12. An Access Point being part of a Wireless Local Area Network (WLAN) made out of a plurality of Access Points (AP) being positioned in at least a known relative relationship to one another and coupled to at least WLAN location server adapted to run a managing system according to claim 8, while said AP is **characterised in that** it has an interface to be connected to the WLAN location server via an IP network and adapted to send to said managing system a notification of received mobile terminal access to said WLAN and adapted to receive settings for said mobile terminal over the perimeter of said WLAN.

13. The Access Point according to claim 12 **characterized in that** the AP being setup to forward to said managing system a notification also at a received status change like an association, a deassociation or reassociation of a mobile terminal.

## Patentansprüche

1. Ein Verfahren zur Lokalisierung einer mobilen Station innerhalb des Umkreises eines drahtlosen lokalen Netzes (WLAN/Wireless Local Area Network), das aus einer Mehrzahl von Zugangspunkten (AP/Access Points) aufgebaut ist, die in mindestens einer bekannten relativen Beziehung zueinander positioniert sind und mit mindestens einem zentralen WLAN-Lokalisierungsserver gekoppelt sind, der ein Verwaltungssystem enthält, während das Verfahren die Schritte umfaßt:
• Weiterleiten von mindestens einem AP einer Benachrichtigung des Zugangs einer mobilen Station zu dem WLAN-Lokalisierungsserver über das WLAN;
• Definieren durch das Verwaltungssystem gemäß der vorhergehenden Benachrichtigung einer Einstellung, die dem Aufenthaltsort der mobilen Station in dem WLAN entspricht;
• **gekennzeichnet durch**
• die Verwendung eines Internet-Protokoll-Netzes in der Verbindung zwischen dem WLAN-Lokalisierungsserver und den Zugangspunkten und
• die Verwendung eines zentralen Verwaltungssystems für Zugangspunkte
• das Halten der Einstellung der mobilen Station als realisiert, wenn sie mindestens bei einer Änderung des Zustandes der mobilen Station über das Internet-Protokoll-Netz und das WLAN-Netz aktualisiert wird.

2. Verfahren nach Anspruch 1 **dadurch gekennzeichnet, daß** eine MAC-Adresse (MAC/Media Access Control) der mobilen Station Teil der entsprechenden Weiterleitungsbenachrichtigung von dem AP an den WLAN-Lokalisierungsserver ist, der das Verwaltungssystem ausführt, das für die entsprechende Einstellung zu verwenden ist.

3. Verfahren nach Anspruch 1 **dadurch gekennzeichnet, daß** der AP eine Benachrichtigung an das Verwaltungssystem ebenfalls bei einer empfangenen zustandsänderung wie eine Zuordnung, eine Aufhebung der Zuordnung oder Neuzuordnung der entsprechenden mobilen Station weiterleiten wird.

4. Verfahren nach Anspruch 1 **dadurch gekennzeichnet, daß** das Verfahren außerdem den Schritt des Auslösens einer Paging-Prozedur umfaßt, wenn kein Signal wie eine Zustandsänderung der mobilen Station durch mindestens einen AP nach einem vorgegebenen Zeitintervall empfangen wird, wobei die Paging-Prozedur auf dem Senden einer Prüfabfrage von mindestens einem AP an die mobile Station als ein Anwesenheitstest innerhalb des WLAN basiert.

5. Verfahren nach Anspruch 4 **dadurch gekennzeichnet, daß** bei dem ersten Zugang der mobilen Station zu dem WLAN eine Prozedur ausgelöst wird, um eine IP-Adresse der entsprechenden mobilen Station unter Verwendung ihrer MAC-Adresse zu erfassen, wobei die IP-Adresse für die Zielbestimmung der mobilen Station verwendet wird, wenn die Paging-Prozedur durchgeführt wird.

6. Verfahren nach Anspruch 1 **dadurch gekennzeichnet, daß** eine Ortszeit oder Folgenummer, die von einer mobilen Station stammt und von der mobilen Station an den AP zu senden ist, mindestens Teil der entsprechenden Weiterleitungsbenachrichtigung von dem AP an das Verwaltungssystem sein wird, das für die entsprechende Einstellung zu verwenden ist.

7. Verfahren nach Anspruch 1 **dadurch gekennzeichnet, daß** die Mehrzahl der AP sowie das Verwaltungssystem synchronisiert werden, so daß ein Zeitstempel in jeder Benachrichtigung eingefügt wird, die durch den AP an das Verwaltungssystem weiterzuleiten ist, das für eine Lokalisierungseinstellung einer speziellen mobilen Station zu verwenden ist.

8. Ein Verwaltungssystem, das eine Software in einem WLAN-Lokalisierungsserver ist, der mit einer Mehrzahl von Zugangspunkten (AP) gekoppelt ist, die ein Wireless Local Area Network (WLAN) definieren und die in mindestens einer bekannten relativen Beziehung zueinander positioniert sind, **dadurch gekennzeichnet, daß** das Verwaltungssystem Module enthält, um die Übersicht über jede mobile Station in dem Umkreis des WLAN zu behalten, wobei das Verwaltungssystem Module enthält, um eine Benachrichtigung des Zugangs einer mobilen Station zu dem WLAN von mindestens einem AP über ein IP-Netz zu empfangen, wobei ein weiteres Modul dem Verwaltungssystem ermöglicht, eine Einstellung zu definieren, die dem Aufenthaltsort der mobilen Station in dem IP-Netz und WLAN entspricht, und ein weiteres Modul die Einstellung als realisiert hält durch ihr Aktualisieren mindestens bei einer Zustandsänderung des Zugangs der mobilen Station, die als Benachrichtigung von mindestens einem AP an das Verwaltungssystem weiterzuleiten ist.

9. Verwaltungssystem nach Anspruch 8 **dadurch gekennzeichnet, daß** es mindestens ein Server ist, der angepaßt daran ist, mit der Mehrzahl der AP unter Verwendung des Internet-Protokolls zu kommunizieren.

10. Ein Lokalisierungssystem für eine mobile Station innerhalb des Umkreises eines Wireless Local Area Network (WLAN), das aus einer Mehrzahl von Zugangspunkten (AP) aufgebaut ist, nach Anspruch 12, die in mindestens einer bekannten relativen Beziehung zueinander positioniert werden und mit mindestens einem Verwaltungssystem in einem WLAN-Lokalisierungsserver nach Anspruch 8 gekoppelt sind.

11. Lokalisierungssystem nach Anspruch 10 **dadurch gekennzeichnet, daß** das Lokalisierungssystem eine Paging-Prozedur-Einrichtung aufweist, die durch mindestens einen AP ausgelöst wird, wenn kein Signal wie eine Zustandsänderung der mobilen Station durch mindestens einen AP nach einem vorgegebenen Zeitintervall empfangen wird, wobei die Paging-Prozedur-Einrichtung auf dem Senden einer Prüfabfrage von dem AP an die mobile Station als ein Anwesenheitstest innerhalb des WLAA1 basiert.

12. Ein Zugangspunkt, der Teil eines Wireless Local Area Network(WLAN) ist, das aus einer Mehrzahl von Zugangspunkten (AP) aufgebaut ist, die in mindestens einer bekannten relativen Beziehung zueinander positioniert sind und mit mindestens dem WLAN-Lokalisierungsserver gekoppelt sind, der angepaßt ist, um ein Verwaltungssystem nach Anspruch 8 auszuführen, während der AP **dadurch gekennzeichnet ist, daß** er eine Schnittstelle aufweist, die mit dem WLAN-Lokalisierungsserver über ein IP-Netz zu verbinden ist, und der angepaßt ist, um an das Verwaltungssystem eine Benachrichtigung des empfangenen Zugangs der mobilen Station an das WLAN zu senden, und der angepaßt ist, um Einstellungen für die mobile Station in dem Umkreis des WLAN zu empfangen.

13. Zugangspunkt nach Anspruch 12 **dadurch gekennzeichnet, daß** der AP eingestellt wird, um an das Verwaltungssystem eine Benachrichtigung ebenfalls bei einer empfangenen Zustandsänderung wie einer Zuordnung, einer Zuordnungsaufhebung oder einer Neuzuordnung einer mobilen Station weiterzuleiten.

## Revendications

1. Procédé pour la localisation d'un terminal mobile à l'intérieur du périmètre d'un réseau local sans fil (WLAN) constitué d'une pluralité de points d'accès (AP) qui sont positionnés dans au moins une relation relative connue les uns par rapport aux autres et couplés à au moins un serveur de localisation WLAN centralisé incluant un système de gestion, tandis que ledit procédé comprend les étapes consistant à :
- transférer depuis au moins un AP une notification d'accès d'un terminal mobile audit serveur de localisation WLAN via ledit WLAN ;
- définir par ledit système de gestion selon une notification précédente un paramètre correspondant à la localisation dudit terminal mobile sur ledit WLAN ;
- **caractérisé par**
- l'utilisation d'un réseau à protocole Internet dans la connexion entre le serveur de localisation WLAN et les points d'accès et
- l'utilisation d'un système de gestion central pour les points d'accès
- le maintien du paramètre du terminal mobile actualisé en le mettant à jour au moins lors d'un changement de statut dudit terminal mobile via le réseau à protocole Internet et le réseu WLAN.

2. Procédé selon la revendication 1, **caractérisé en ce qu'**une adresse de contrôle d'accès au support (MAC) du terminal mobile fait partie de la notification de transfert correspondante du AP audit serveur de localisation WLAN exécutant le système de gestion devant être utilisé pour le paramètre correspondant.

3. Procédé seon la revendication 1, **caractérisé en ce que** l'AP transfèrera une notification audit système de gestion également lors d'un changement de statut reçu comme une association, une désassociation ou une réassociation du terminal mobile correspondant.

4. Procédé selon la revendication 1, **caractérisé en ce que** ledit procédé comprend en outre l'étape consistant à initier une procédure de téléappel si aucun signal comme un changement de statut dudit terminal mobile n'est reçu par au moins un AP après un intervalle de temps prédéfini, ladite procédure de téléappel étant basée sur l'envoi d'une requête de vérification d'au moins un AP audit terminal mobile comme un test de présence à l'intérieur dudit WLAN.

5. Procédé selon la revendication 4, **caractérisé en ce qu'**au premier accès du terminal mobile audit WLAN une procédure sera initiée pour collecter une adresse IP du terminal mobile correspondant en utilisant son adresse MAC, ladite adresse IP étant utilisée pour cibler ledit terminal mobile lors de l'exécution de ladite procédure de téléappel.

6. Procédé selon la revendication 1, **caractérisé en ce qu'**une heure locale ou numéro de séquence provenant d'un terminal mobile et devant être transmis du terminal mobile à l'AP fera au moins partie de la notification de transfert correspondante de l'AP audit système de gestion devant être utilisé pour le paramètre correspondant.

7. Procédé selon la revendication 1, **caractérisé en ce que** la pluralité d'APs ainsi que le système de gestion sont synchronisés de sorte qu'une estampille temporelle sera insérée dans chaque notification devant être transférée par l'AP audit système de gestion pour être utilisée pour un paramètre de localisation d'un terminal mobile spécifique.

8. Système de gestion, qui est un logiciel dans un serveur de localisation WLAN couplé à une pluralité de points d'accès (AP) définissant un réseau local sans fil (WLAN) et qui sont positionnés dans au moins une relation relative connue les uns par rapport aux autres, **caractérisé en ce que** ledit système de gestion inclut des modules pour suivre la trace de chaque terminal mobile sur le périmètre dudit WLAN, le système de gestion inclut des modules pour recevoir une notification d'accès d'un terminal mobile audit WLAN depuis au moins un AP via un réseau IP, un autre module permet audit système de gestion de définir un paramètre correspondant à la localisation dudit terminal mobile sur ledit réseau IP et WLAN, et un autre module maintient ledit paramètre actualisé en le mettant à jour au moins lors d'un changement de statut dudit accès du terminal mobile devant être transféré comme notification d'au moins un AP audit système de gestion.

9. Système de gestion selon la revendication 8, **caractérisé en ce qu'**il y a au moins un serveur adapté pour communiquer avec la pluralité d'APs en utilisant le protocole Internet.

10. Système de localisation pour terminal mobile à l'intérieur du périmètre d'un réseau local sans fil (WLAN) constitué d'une pluralité de points d'accès (AP) selon la revendication 12 qui sont positionnés dans au moins une relation relative connue les uns par rapport aux autres et couplés à au moins un système de gestion dans un serveur de localisation WLAN selon la revendication 8.

11. Système de localisation selon la revendication 10, **caractérisé en ce que** le système de localisation a un moyen de procédure de téléappel qui est initié par au moins un AP si aucun signal comme un changement de statut du terminal mobile n'est reçu par au moins un AP après un intervalle de temps prédéfini, ledit moyen de procédure de téléappel étant basé sur l'envoi d'une requête de vérification dudit AP audit terminal mobile comme un test de présence à l'intérieur dudit WLAN.

12. Point d'accès faisant partie d'un réseau local sans fil (WLAN) constitué d'une pluralité de points d'accès (AP) qui sont positionnés dans au moins une relation relative connue les uns par rapport aux autres et couplés à au moins un serveur de localisation WLAN adapté pour exécuter un système de gestion selon la revendication 8, tandis que ledit AP est **caractérisé en ce qu'**il a une interface devant être connectée au serveur de localisation WLAN via un réseau IP et adaptée pour envoyer audit système de gestion une notification de l'accès du terminal mobile reçu audit WLAN et adaptée pour recevoir des paramètres pour ledit terminal mobile sur le périmètre dudit WLAN.

13. Point d'accès selon la revendication 12, **caractérisé en ce que** l'AP est établi pour transférer audit système de gestion une notification également lors d'un changement de statut reçu comme une association, une désassociation ou une réassociation d'un terminal mobile.
